# FASCICULE DE BREVET EUROPEEN

(11) **EP 2 182 422 B1**
(45) Date de publication et mention de la délivrance du brevet: **03.12.2014**
(21) Numéro de dépôt: 09173887.2
(22) Date de dépôt: 23.10.2009
(51) Int. Cl.: G06K 19/07, G06F 3/01, H04M 1/725

(54) **Carte à microcircuit, dispositif électronique associé à une telle carte, et procédé de commande d'un tel dispositif électronique**
Chipkarte, elektronisches mit einer solchen Karte verbundenes Gerät und Verfahren zur Steuerung eines solchen Gerätes
Microcircuit card, electronic device associated to such a card and method for controlling said electronic device

(30) Priorité: 30.10.2008 FR 0806041
(43) Date de publication de la demande: 05.05.2010
(73) Titulaire: Oberthur Technologies, 92700 Colombes (FR)
(72) Inventeur: Denis, Sylvestre, 78800 HOUILLES (FR)
(74) Mandataire: Santarelli

(56) Documents cités:
- EP-A- 1 347 623
- EP-A- 1 617 629
- WO-A-2007/149747
- WO-A-2008/010103
- US-A1- 2004 259 591

## Description

L'invention concerne une carte à microcircuit, un dispositif électronique équipé d'une telle carte et un procédé de commande d'un tel dispositif électronique.

Il a déjà été proposé d'équiper un dispositif électronique d'un capteur de mouvement ou d'orientation afin de pouvoir faire fonctionner le dispositif électronique en fonction du mouvement ou de la position détecté(e) par le capteur ; on peut ainsi prévoir par exemple le déclenchement de certaines fonctions du dispositif électronique selon les déplacements effectués par celui-ci (généralement du fait d'actions volontaires de l'utilisateur).

Dans ce contexte, le document WO 2007/149747 propose de placer le capteur de mouvement dans une carte amovible qui peut ainsi transmettre au dispositif électronique qui la reçoit un message indicatif de l'évènement (c'est-à-dire du mouvement) détecté par le capteur. Le document EP 1 617 629 décrit également une solution de ce type.

Si cette solution permet de profiter des fonctionnalités offertes par la présence du capteur de mouvement sans avoir à remplacer le dispositif électronique dans son intégralité (mais seulement la carte amovible), elle nécessite toutefois que le dispositif (en pratique probablement le logiciel exécuté dans ce dispositif électronique) soit adapté à recevoir et à traiter les messages indicatifs du mouvement détecté, ainsi qu'à commander la fonctionnalité recherchée en fonction du message reçu.

Afin notamment d'éviter cette contrainte et de faire ainsi profiter le dispositif électronique de la présence du capteur de mouvement dans la carte sans aucune adaptation du dispositif électronique, l'invention propose une carte à microcircuit comprenant des moyens d'interaction avec un dispositif électronique, un capteur de mouvement ou d'orientation générant des signaux représentatifs de mouvements ou d'une orientation de la carte, des moyens d'identification d'au moins un type de mouvement ou de position sur la base desdits signaux, caractérisée en ce qu'elle comprend des moyens d'émission d'une commande exécutable par le dispositif électronique et associée au type identifié.

Les étapes décisives de la détection de mouvement à la détermination de l'action à effectuer sont ainsi réalisées au sein de la carte qui envoie au dispositif électronique une commande exécutable, sans que le dispositif n'ait à connaître ces étapes décisives.

La carte à microcircuit est par exemple un module d'identification, auquel cas la commande peut être une commande de la boîte à outils du module d'identification : en pratique, la carte à microcircuit est par exemple une carte d'identification auprès d'un réseau de téléphonie mobile (par exemple SIM ou USIM) et la commande peut alors être une commande de type SIM Toolkit.

On peut prévoir par exemple que la commande est apte à mettre en oeuvre la restitution d'un signal (telle que l'affichage d'un menu, par exemple celui de l'opérateur, ou la reproduction d'un signal sonore) par le dispositif électronique lorsqu'elle est exécutée par le dispositif électronique.

Dans les cas où le dispositif électronique est un dispositif de télécommunication, la commande peut être apte (lorsqu'elle est exécutée par le dispositif électronique) à initier une communication.

Le capteur de mouvement est par exemple un accéléromètre ; d'autres types de capteur sont toutefois envisageables.

Selon une possibilité envisageable décrite plus en détail dans la suite, la carte à microcircuit comprend des moyens de réception, en provenance du dispositif électronique, d'une information indicative d'un événement, tel qu'un événement d'une boîte à outils (typiquement de type SIM Toolkit), indicative par exemple d'un signal reçu ; les moyens d'identification peuvent alors en particulier être aptes à identifier le type de mouvement ou de position précisément lors de la détection de l'événement et la commande peut dans ce cas par exemple être associée à l'événement (par exemple au signal reçu).

Selon une autre possibilité envisageable, éventuellement en combinaison avec la précédente, on peut prévoir des moyens de détection d'une action de l'utilisateur et des moyens d'association, en fonction de l'action détectée, d'un type de mouvement ou de position du dispositif à une fonction du dispositif. On fournit ainsi à l'utilisateur une plus grande souplesse d'utilisation.

On peut prévoir également des moyens de détermination de l'orientation relative de la carte et du dispositif électronique sur la base desdits signaux représentatifs. L'orientation relative peut ainsi être déterminée suite à un mouvement spécifique réalisé par l'utilisateur.

On peut par ailleurs prévoir des moyens d'émission, à destination du dispositif et sous condition au moins de l'initiation de l'interaction, d'un programme exécutable par un microprocesseur du dispositif (ce programme comprenant des instructions exécutables par ce microprocesseur), par exemple afin de lancer automatiquement un programme d'installation d'un algorithme de traitement visant à alléger les traitements mis en oeuvre dans la carte à microcircuit comme décrit plus en détail dans la suite.

L'invention propose également un dispositif électronique portant une carte à microcircuit comme évoqué ci-dessus et interagissant avec cette carte à microcircuit.

L'invention propose enfin un procédé de commande d'un dispositif électronique interagissant avec une carte à microcircuit comprenant un capteur de mouvement ou d'orientation, **caractérisé en ce qu**'il comprend les étapes suivantes :
- génération de signaux représentatifs de mouvements ou d'une orientation de la carte par le capteur de mouvement ou d'orientation ;
- identification d'un type de mouvement ou de position sur la base desdits signaux ;
- émission par la carte d'une commande associée au type identifié à destination du dispositif électronique ;
- mise en oeuvre d'une fonctionnalité du dispositif électronique par exécution de ladite commande.

D'autres caractéristiques et avantages de l'invention apparaîtront à la lumière de la description qui suit, faite en référence aux dessins annexés dans lesquels :
- la figure 1 représente les éléments principaux d'un téléphone portable participant à la mise en oeuvre de l'invention ;
- la figure 2 représente les éléments principaux d'une carte à microcircuit réalisée selon les enseignements de l'invention ;
- la figure 3 représente un premier exemple d'application envisageable pour les dispositifs des figures 1 et 2 ;
- la figure 4 représente un second exemple d'application de ces dispositifs ;
- la figure 5 représente un procédé envisageable pour la configuration des fonctions associées à des mouvements du dispositif de la figure 1 ;
- les figures 6a et 6b représentent un procédé mis en oeuvre dans un exemple possible de réalisation de l'invention ;
- la figure 7 représente une variante envisageable pour certaines étapes de la figure 6a ;
- la figure 8 représente un procédé éventuellement mis en oeuvre lors de l'initialisation de la carte à microcircuit de la figure 2.

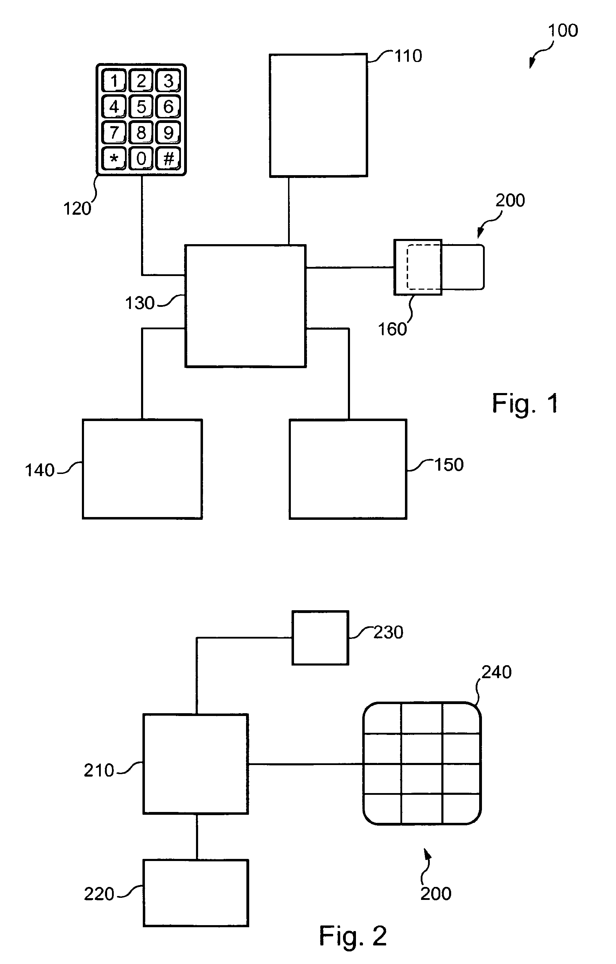

La **figure 1** représente les éléments principaux d'un dispositif électronique de télécommunication (ici précisément un téléphone portable) 100.

Le téléphone portable 100 comprend un microprocesseur 130 auquel est associée une mémoire non volatile 140 (par exemple du type Flash) et une mémoire volatile (ou mémoire RAM) 150.

Le téléphone portable comprend également un clavier 120 et un écran 110 qui forment des moyens d'interface avec un utilisateur du téléphone portable.

Le téléphone portable reçoit enfin une carte à microcircuit 200 (décrite plus en détail dans la suite) apte à échanger des données avec le microprocesseur 130, par exemple ici à travers des moyens de connexion physiques 160. En variante, on pourrait naturellement prévoir d'autres moyens pour échanger des données entre le microcircuit 130 et la carte à microcircuit 200, tels que par exemple des moyens de communication sans fil, éventuellement courte portée.

La **figure 2** représente les éléments principaux de la carte à microcircuit 200.

La carte à microcircuit comprend un microprocesseur 210 associé à une mémoire non volatile 220.

Une interface entrée/sortie 240 (qui comprend notamment des plots destinés à entrer en contact avec des plots correspondant des moyens de connexion 160) permet au microprocesseur 210 de la carte à microcircuit 200 d'interagir avec un équipement extérieur, notamment le microprocesseur 130 du téléphone portable 100 lorsque la carte à microcircuit 200 est montée au contact des moyens de connexion 160.

La carte à microcircuit 200 comprend également un capteur de mouvement 230, ici du type accéléromètre, qui permet d'avoir accès à une composante au moins du mouvement de la carte à microcircuit 200 dans le référentiel terrestre, ici par le biais de l'accélération selon au moins une dimension de la carte à microcircuit.

En variante, le capteur de mouvement 230 pourrait être un gyroscope, apte par exemple à mesurer la vitesse rotationnelle de la carte autour d'un axe. Selon une autre variante, le capteur de mouvement 230 pourrait être remplacé par un capteur de position, tel que par exemple un capteur magnétique apte à déterminer la position de la carte à microcircuit 200 dans le champ magnétique terrestre (voir par exemple à ce sujet la demande de brevet EP 1 731 098).

Plusieurs capteurs de position ou de mouvement peuvent naturellement être utilisés dans la carte à microcircuit 200 sans sortir du cadre de la présente demande de brevet.

Par ailleurs, le capteur de mouvement 230 peut selon un premier type de réalisation envisageable délivrer (ici à l'attention du microprocesseur 210) une information indicative du mouvement détecté à un instant déterminé (que ce soit de manière continue ou en réponse à une requête du microprocesseur 210).

Selon un second type de réalisation envisageable, le capteur de mouvement 230 peut en outre mémoriser une pluralité de valeurs détectées et délivrer ainsi un historique des valeurs (comprenant la pluralité précédemment mentionnée), par exemple avec une période déterminée ou en variante sur requête du microprocesseur 210.

La carte à microcircuit 200 est par exemple une carte d'identification d'abonné à un réseau de téléphonie (en particulier de téléphonie mobile), telle qu'une carte SIM (pour *"Subscriber Identity Module"*), une carte USIM (pour *"Universal Subscriber Identity Module"*), ou une carte RUIM (pour *"Removable Universal Identity Module"*).

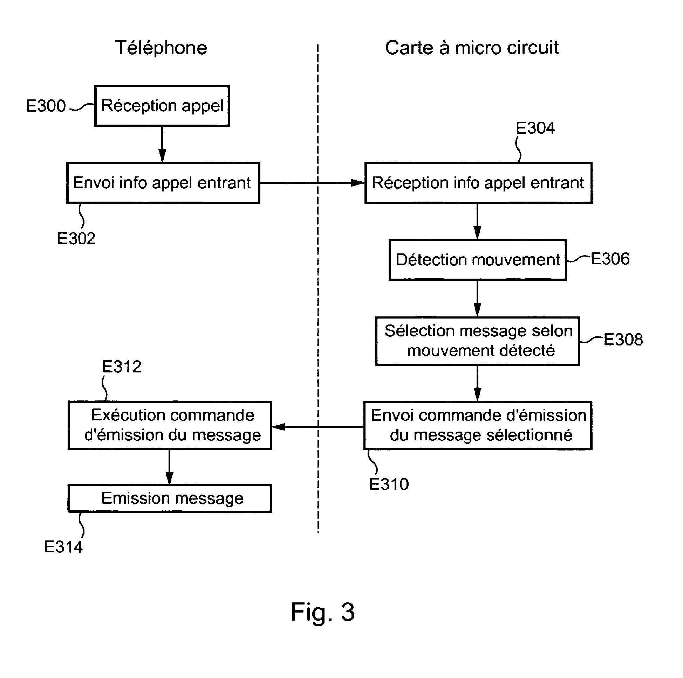

La **figure 3** représente un premier exemple d'application envisageable pour les dispositifs qui viennent d'être mentionnés.

Dans cette application, lorsque le téléphone reçoit une communication en provenance d'un autre dispositif électronique connecté au même réseau de télécommunication (étape E300), il en informe la carte à microcircuit 200 à l'étape E302 (par exemple au moyen d'un événement SIM Toolkit). Le microprocesseur 210 de la carte à microcircuit 200 reçoit alors à l'étape E304 cette information selon laquelle un appel entrant est détecté.

Le microprocesseur 210 procède alors à un algorithme (ou programme) de détection de mouvements à l'étape E306 qui utilise les données issues du capteur 230. Un tel algorithme est par exemple mémorisé dans la mémoire non volatile 220 de la carte à microcircuit 200.

Le microprocesseur 210 émet alors une commande à destination du microprocesseur 130 du téléphone portable 100 qui dépend du type de mouvement détecté.

Par exemple, le microprocesseur 210 sélectionne un message prédéterminé dans la mémoire non volatile 220 en fonction du mouvement détecté à l'étape E306 et envoie une commande, par exemple une commande SIM Toolkit d'envoi du message sélectionné par le réseau de téléphonie mobile, par exemple par SMS (auquel cas la commande SIM Toolkit utilisée est *"SEND SMS"*) ou MMS ; en variante, un message vocal peut être envoyé.

Il s'agit par exemple d'un message d'un premier type si deux tapes sur le téléphone sont détectées (détection de deux séries de vibrations de faible amplitude par le capteur) et d'un message d'un second type (ou en variante d'une absence de réaction) en cas de mouvement répété dans une direction puis dans la direction opposée. Les messages d'un premier type et d'un second type et le mouvement auquel chaque type de message est associé sont mémorisés dans la mémoire non-volatile 220.

La commande SIM Toolkit est transmise au microprocesseur 130 du téléphone portable 100 qui la reçoit et l'exécute à l'étape E312, ce qui provoque à l'étape E314 l'émission par le réseau de téléphonie mobile du message préalablement sélectionné en fonction du mouvement détecté par le capteur de mouvement 230 de la carte à microcircuit.

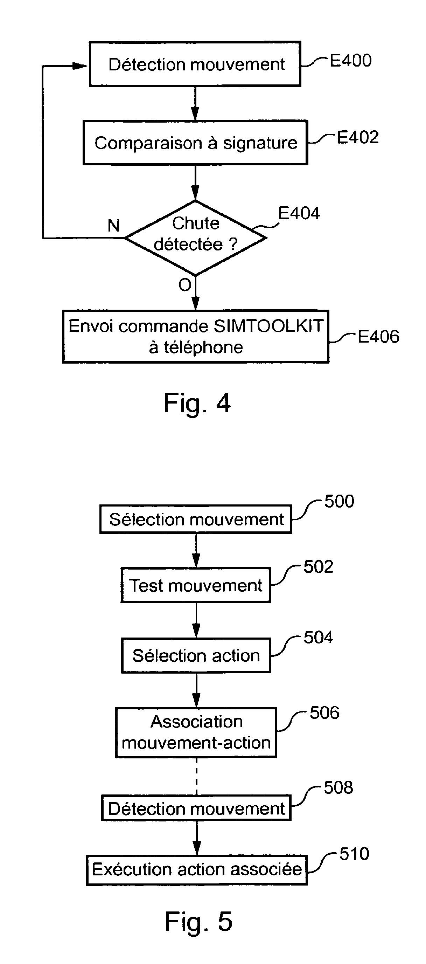

La **figure 4** représente un autre exemple d'application des dispositifs qui viennent d'être décrits.

Dans cette application, le capteur de mouvement 230 détecte en continu à l'étape E400 le mouvement de la carte à microcircuit 200 (et par conséquent également celui du téléphone portable 100 qui porte cette carte à microcircuit 200).

Les valeurs de mouvement détectées sont périodiquement comparées à une signature d'un mouvement de chute (par exemple mémorisée en mémoire non volatile 220). On pourra à ce sujet se référer par exemple à la demande de brevet US 2001/004234.

On détermine alors à l'étape E404 si une chute est détectée (en fonction du résultat de la comparaison de l'étape E402).

Si aucune chute n'est détectée, on continue la détection continue du mouvement à l'étape E400.

En revanche, si une chute est détectée par la comparaison positive des valeurs de mouvement détectées à la signature mémorisée dans la mémoire non volatile 220 (signature qui correspond par exemple à un mouvement de chute d'une personne portant le téléphone), le microprocesseur 210 procède à l'envoi d'une commande destinée au téléphone portable 100 et exécutable par le microprocesseur 130. Il s'agit par exemple d'une fonction SIM Toolkit tel que défini par la norme GSM11.14.

La commande émise par le microprocesseur 210 à destination du microprocesseur 130 (transmise par conséquent à travers l'interface 240 et les moyens de connexion 160) entraîne selon une possibilité envisageable la génération d'un appel par le téléphone portable 100 au moyen du réseau de téléphonie mobile, afin par exemple de prévenir un centre de secours. Une communication avec le porteur du téléphone portable peut être initiée (on utilise alors la commande SIM Toolkit *"SET UP CALL*").

En variante, la commande émise par le processeur 210 pourrait générer l'émission d'un message à travers le réseau de téléphonique mobile (par exemple de type SMS, auquel cas on utilise la commande SIM Toolkit *"SEND SMS"*), le message pouvant notamment inclure l'identité du titulaire de l'abonnement, avec éventuellement d'autres informations (telles que par exemple des informations de localisation du téléphone portable, obtenues soit par le biais de l'identification de la cellule à laquelle est connecté le téléphone portable 100 dans un réseau cellulaire, soit par des moyens de géolocalisation de type GPS par exemple).

On comprend que le téléphone portable émet ainsi un appel ou un message sur la base d'un mouvement détecté par la carte à microcircuit 200, sans que le téléphone portable n'ait en lui-même été au préalable configuré pour effectuer une telle détection.

On remarque que dans les exemples qui viennent d'être décrits, on déduit le mouvement ou la position du téléphone portable 100 à partir des mouvements ou de la position de la carte à microcircuit 200 du fait que ces deux éléments sont physiquement liés.

Il peut toutefois être souhaitable d'indiquer le positionnement de la carte à microcircuit 200 dans le téléphone portable 100 (en particulier si des commandes initiées par mouvement dépendent de l'orientation relative du téléphone portable 100 et de la carte à microcircuit 200). Il s'agit d'une étape de configuration qui pourra naturellement n'être réalisée que lors de la première introduction de la carte à microcircuit 200 dans le téléphone portable 100.

Selon une première possibilité de réalisation, le positionnement de la carte 200 dans le téléphone portable 100 pourra être indiqué par l'utilisateur à l'aide du clavier 120 en réponse à l'affichage d'un menu correspondant au moyen de l'écran 110. Préférentiellement, le menu est mémorisé par la carte à microcircuit 200 (mémoire non volatile 220) et l'affichage par le téléphone est commandé par une commande SIM Toolkit "*SELECT ITEM*" envoyée par la carte 200 au téléphone portable 100.

Selon une seconde possibilité de réalisation, une application est mise en oeuvre par le microprocesseur 210 provoque l'affichage sur l'écran 110 d'un message demandant à l'utilisateur de réaliser un mouvement particulier avec le téléphone portable 100.

La détection par le capteur de mouvement 230 situé dans la carte 200 du mouvement particulier du téléphone 100 réalisé par l'utilisateur permet alors au processeur 210 de déduire l'orientation relative de la carte à microcircuit 200 et du téléphone portable 100.

La **figure 5** représente un procédé envisageable pour la configuration des fonctions associées à des mouvements du téléphone, par exemple en complément de ce qui vient d'être décrit à propos du positionnement de la carte à microcircuit dans le téléphone portable 100.

Ce procédé commence par un affichage d'une représentation des mouvements possibles sur l'écran 110 du téléphone portable 100 et la sélection de l'un de ces mouvements par l'utilisateur au moyen de l'interface (ici du clavier 120) à l'étape E500.

Selon une possibilité envisageable, on peut alors demander à l'utilisateur de réaliser ce mouvement afin d'effectuer un test à l'étape E502 : on pourra alors, en fonction du mouvement effectivement réalisé tel que détecté par le capteur de mouvement 230, afficher des informations permettant à l'utilisateur de s'approcher du mouvement prédéfini, en répétant éventuellement le test de l'étape E502 tant que le mouvement réalisé par l'utilisateur et détecté par le capteur de mouvement 230 n'est pas suffisamment proche du mouvement prédéfini sélectionné à l'étape E500 (par exemple en termes de signature du mouvement).

On demande ensuite à l'utilisateur de sélectionner au moyen de l'interface 110, 120 une action à associer au mouvement sélectionné à l'étape E500 : l'action à associer est typiquement une fonctionnalité mise en oeuvre par le téléphone portable 100, tel que par exemple l'affichage d'un menu, l'appel d'un numéro prédéterminé, l'envoi d'un message (par exemple de type SMS), la connexion au réseau Internet ou la mise en oeuvre de moyens de communication sans fil autres que ceux du réseau de téléphonie (par exemple de type Bluetooth ou WIFI).

Une fois l'action sélectionnée par l'utilisateur, on procède à l'association du mouvement sélectionné à l'étape E500 et de l'action sélectionnée à l'étape E504, par exemple en mémorisant cette association dans la mémoire non volatile 220.

Ainsi, lors d'étapes ultérieures du fonctionnement du téléphone portable 100, si le mouvement (préalablement sélectionné à l'étape E500, par exemple une tape brève sur le téléphone détecté par le capteur 230 comme un mouvement bref de faible amplitude) est détecté par le capteur de mouvement 230 comme représenté à l'étape E508, le microprocesseur 210 demandera la mise en oeuvre (étape E510) par le microprocesseur 130 du téléphone portable 100 de l'action (par exemple, l'affichage d'un menu tel que celui de l'opérateur) associée au mouvement détecté, comme décrit ci-dessus, en utilisant par exemple une commande SIM Toolkit appropriée ("*SELECT ITEM*" dans le cas de l'exemple de l'affichage du menu de l'opérateur précédemment mentionné).

Selon une variante envisageable, les étapes E500 et E502 précitées pourraient être remplacées par l'affichage d'une demande destinée à l'utilisateur de réaliser un mouvement libre et par la détection du mouvement réalisé par l'utilisateur qui sera ainsi ensuite le mouvement associé à l'une des actions envisageables, selon les souhaits de l'utilisateur.

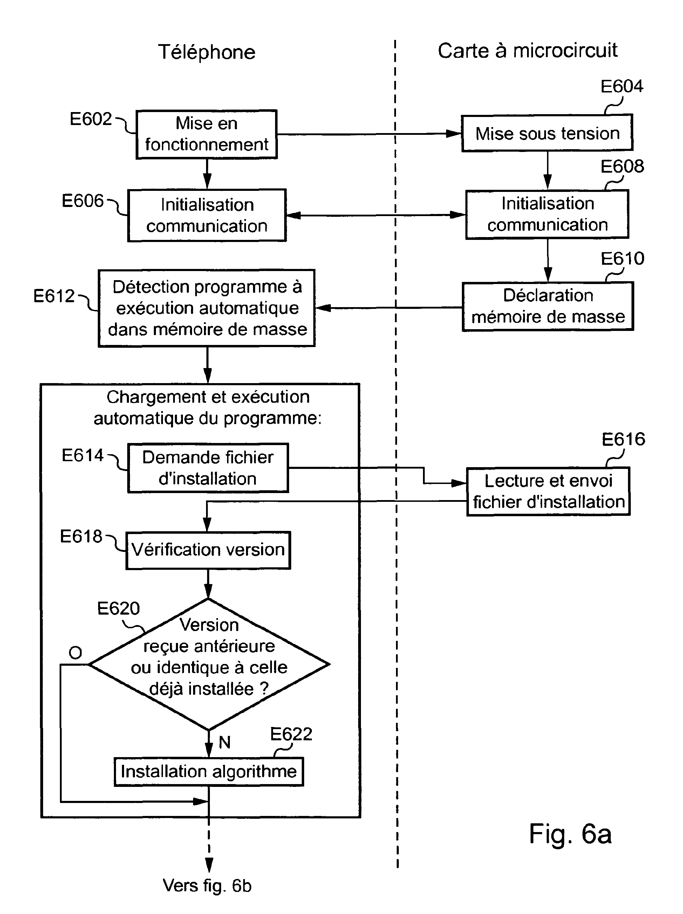

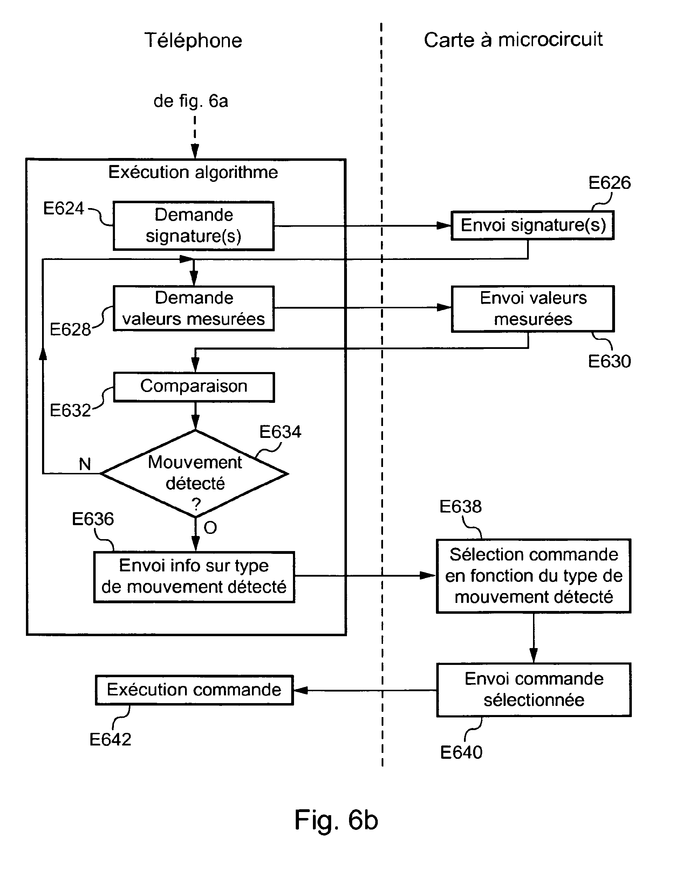

Les **figures 6a** **et** **6b** représentent un procédé mis en oeuvre dans un exemple possible de réalisation dans lequel une partie du traitement des signaux issus du capteur de mouvement ou de position 230 est réalisée par le microprocesseur 130 du téléphone 100.

Dans ce procédé, l'utilisateur met par exemple en fonctionnement le téléphone à l'étape E602 ce qui provoque la mise sous tension de la carte à microcircuit à l'étape E604 et l'initialisation d'une communication entre ces deux entités (étapes E606 et E608) selon les protocoles ISO7816 et USB (la carte à microcircuit 200 possédant des contacts adaptés pour communiquer selon ces deux types de protocole conformément à la norme ISO7816-12).

La carte à microcircuit 200 déclare alors une partie au moins de la mémoire non volatile 220 comme mémoire de masse (ici selon le protocole USB) à l'étape E610. La mémoire de masse déclarée contient un programme de type "*autorun*", destiné à être exécuté automatiquement par le processeur auquel se connecte cette mémoire de masse.

Ainsi, le microprocesseur 130 du téléphone portable 100 détecte ce programme à exécution automatique à l'étape E612 et charge dans sa mémoire volatile 150 (en provenance de la mémoire de masse déclarée à l'étape E610) et exécute le programme à lancement automatique, ce qui provoque la mise en oeuvre des étapes E614 à E622 décrites à présent.

A l'étape E614, le programme à lancement automatique émet à destination de la carte à microcircuit 200 une demande de fichier d'installation d'un algorithme de traitement des données du capteur de mouvement.

La carte à microcircuit lit dans sa mémoire non volatile et envoie à l'étape E616 à destination du téléphone portable le fichier d'installation demandé.

Le microprocesseur 130 vérifie alors la version du fichier d'installation reçu et la compare à la version d'un fichier du même type précédemment installé à l'étape E620.

Si un fichier du même type a déjà été installé et que la version qui vient d'être reçue de la carte à microcircuit est antérieure ou la même que la version déjà installée, on ne procédera pas à l'étape E622.

Dans les autres cas, on procède à l'étape E622 à l'installation de l'algorithme de traitement au moyen des fichiers reçus à l'étape E616.

L'algorithme de traitement qui vient d'être installé comme expliqué ci-dessus peut alors être mis en oeuvre à un moment ultérieur du fonctionnement du téléphone portable 100, par exemple en tant que tâche de fond.

Dans l'exemple décrit ici, cet algorithme comprend notamment une étape E624 à laquelle il demande des signatures de mouvement mémorisées dans la carte à microcircuit 200 (précisément dans la mémoire non volatile 220).

La carte à microcircuit 200 envoie les signatures demandées à l'étape E626.

L'algorithme de traitement comprend également une étape E628 de demande à la carte à microcircuit 200 de valeurs représentatives du mouvement ou de la position du téléphone portable détecté par le capteur de mouvement ou de position 230.

On remarque sur ce point que les demandes de l'étape E624 et de l'étape E628 sont par exemple réalisées sous la forme d'une commande APDU.

Les valeurs mesurées sont envoyées au téléphone 100 à l'étape E630.

L'algorithme de traitement comprend une étape de comparaison E632 à laquelle sont comparées les dernières valeurs mesurées et reçues par le téléphone portable à (ou aux) signature(s) de mouvement de manière à déterminer à l'étape E634 si un mouvement particulier est détecté.

Dans la négative, l'algorithme de traitement retourne à l'étape E628 (mise en oeuvre périodiquement) où de nouvelles valeurs mesurées par le capteur 230 sont demandées à l'aide d'une commande APDU.

Si un mouvement d'un type particulier est au contraire détecté à l'étape E634, l'algorithme de traitement émet à l'étape E636 une information indicative du type de mouvement détecté à destination du microprocesseur 210 de la carte à microcircuit 200.

A réception de cette information, le microprocesseur 210 sélectionne une commande en fonction du type de mouvement détecté comme cela a été décrit plus haut (étape E638).

La commande sélectionnée est envoyée par le microprocesseur 210 au microprocesseur 130 du téléphone portable 100 (par exemple sous forme d'une commande SIM Toolkit).

Le microprocesseur 130 reçoit la commande sélectionnée et l'exécute à l'étape E642.

Le procédé qui vient d'être décrit permet de réaliser une partie du traitement, en particulier une partie consommatrice des ressources mémoire et processeur, au sein du téléphone portable 100 afin d'alléger la charge du traitement découlant de la présence du capteur de mouvement ou de position 230 dans la carte à microcircuit 200.

Toutefois, grâce à l'installation automatique de l'algorithme de traitement comme également décrit ci-dessus, la solution peut être mise en oeuvre dans un téléphone portable non spécialement préparé à cet effet.

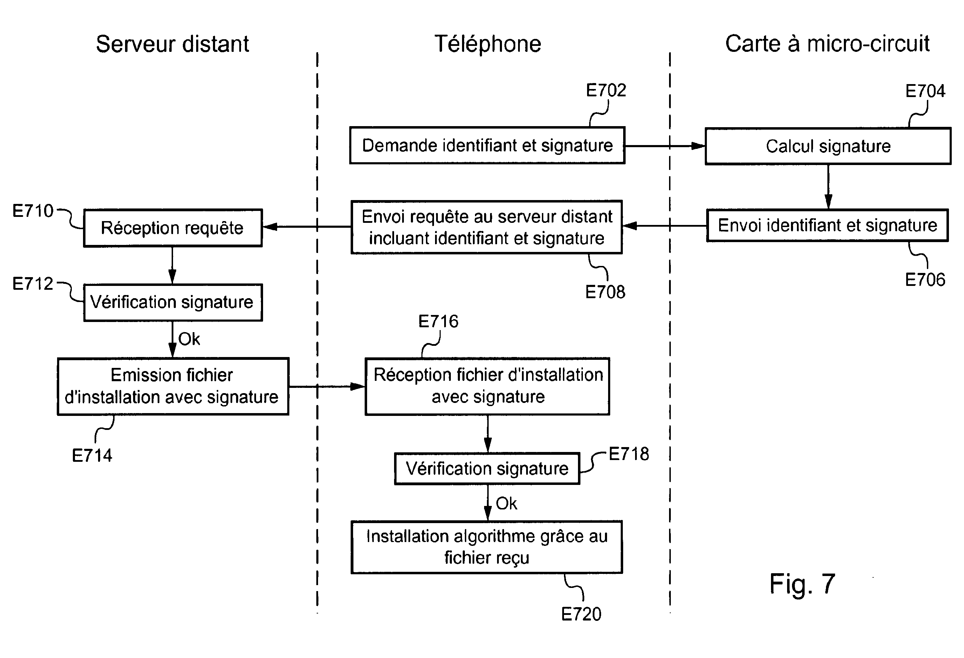

La **figure 7** représente une variante envisageable pour les étapes E614 et E622 de la figure 6a.

Les étapes de ce procédé mises en oeuvre au sein du téléphone (à savoir les étapes E702, E708, E716, E718 et E720) sont réalisées au sein d'un programme à exécution automatique présent sur la carte à microcircuit et automatiquement chargé et exécuté dans le téléphone comme déjà décrit à propos de la figure 6a (et on ne reviendra donc pas en détail sur les étapes antérieures équivalentes aux étapes E602 à E612 de la figure 6a).

A l'étape E702, le programme à exécution automatique provoque l'émission d'une requête par le processeur 130 du téléphone 100 à destination de la carte à microcircuit 200 afin que celle-ci communique un identifiant de l'abonné et une signature associée.

La carte à microcircuit effectue ainsi à l'étape E704 le calcul de la signature cryptographique associée à l'identifiant de l'abonné (par exemple à l'aide d'une clé privée mémorisée dans la carte à microcircuit).

La carte à microcircuit envoie ensuite à l'étape E706 l'identifiant et la signature cryptographique à destination du téléphone 100.

Le téléphone peut ainsi émettre une requête incluant l'identifiant à la signature à destination d'un serveur distant à l'étape E708.

La connexion au serveur distant est par exemple réalisée en utilisant les moyens de connexion du téléphone portable 100 au réseau de téléphonie (ainsi par exemple la communication avec le serveur distant peut se faire à travers le réseau de téléphonie puis le réseau Internet).

Pour ce faire, le programme à exécution automatique mis en oeuvre par le téléphone comprend une adresse de connexion au serveur distant. (En variante, cette adresse pourrait être mémorisée au sein de la carte à microcircuit et obtenue par requête du téléphone à la carte à microcircuit).

Selon une variante envisageable pour les étapes E702 à E708, le programme automatiquement chargé de la carte à microcircuit au téléphone pourrait inclure l'identifiant et la signature cryptographique de la carte à microcircuit, auquel cas il ne serait pas nécessaire de procéder aux étapes E702 à E706.

Suite à l'étape E708, le serveur distant reçoit la requête à l'étape E710 et peut ainsi vérifier la signature cryptographique reçue à l'étape E712 par exemple au moyen de la clé publique associée à la clé privée de la carte.

On pourrait naturellement envisager d'autres moyens d'authentification de la carte à microcircuit génératrice de l'initialisation du processus décrit ici que la signature, auquel cas l'étape E712 consisterait à la vérification de l'authenticité de l'émetteur de la requête.

Lorsque la signature est vérifiée, on procède à l'étape E714 à laquelle le serveur distant émet un fichier d'installation avec une signature associée (ou autre moyen d'authentification), le fichier d'installation pouvant éventuellement être sélectionné parmi une pluralité de fichiers d'installation possibles en fonction de l'identifiant reçu à l'étape E710.

Naturellement, si la signature n'est pas vérifiée correctement à l'étape E712, il est mis fin au procédé et on ne met en oeuvre l'étape E714.

Dans le cas où l'étape E714 a été réalisée, le téléphone reçoit à l'étape E716 le fichier d'informations et la signature associée.

Le téléphone (précisément le microprocesseur 130) peut alors vérifier la signature (ou autre moyen d'authentification) à l'étape E718 ce qui permet de contrôler la légitimité et/ou l'intégrité des applications qui sont chargées dans le téléphone.

En cas de vérification positive, un algorithme de traitement des valeurs issues du capteur de mouvement ou de position est installé dans le téléphone 100 à l'aide du fichier d'installation reçu à l'étape E716.

Cet algorithme peut alors être mis en oeuvre, par exemple en tâche de fond, comme décrit sur la figure 6b aux étapes E624 et suivantes.

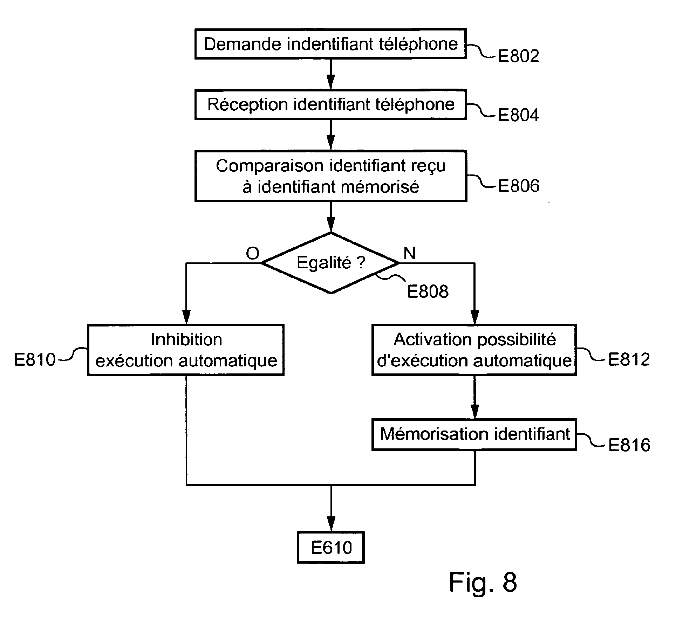

On a représenté à la **figure 8** un procédé éventuellement mis en oeuvre lors de l'initialisation de la carte à microcircuit 200 (comme décrit à propos de la communication à l'étape E608 en figure 6) afin de déterminer s'il s'agit de la première utilisation de la carte à microcircuit dans le téléphone et d'inhiber l'exécution automatique du programme d'installation comme décrit ci-dessus dans la négative.

Ce procédé débute à l'étape E802 par la demande d'un identifiant du téléphone à partir de la carte à microcircuit par exemple en utilisant la commande SIM Toolkit *"Provide Local Information*" avec l'option *"IMEI"* qui permet à la carte à microcircuit d'obtenir l'identifiant unique IMEI (pour "*International Mobile Equipment Identifier*") du téléphone 100.

La carte à microcircuit 200 reçoit alors en réponse cet identifiant à l'étape E804 et compare à l'étape E806 l'identifiant reçu à un identifiant préalablement mémorisé lors des précédentes mises en oeuvre du procédé (voir l'étape E816 décrite plus bas à ce sujet).

En cas d'égalité des identifiants (cf. étape E808), on procède (étape E810) à l'inhibition de l'exécution automatique du programme mentionné dans la description relative aux figures 6a et 7 : l'inhibition est par exemple réalisée en modifiant le nom du fichier d'exécution automatique afin qu'il ne soit plus nommé en tant que fichier à lancement automatique. En variante, on pourrait également déplacer le fichier ou modifier ses attributs de sorte qu'il soit considéré comme un fichier caché et ne soit donc pas automatiquement exécuté. Selon une autre variante encore, on pourrait simplement supprimer le fichier.

En l'absence d'égalité à l'étape E808 (auquel cas on considère qu'il s'agit de la première mise sous tension du téléphone portable avec la carte à microcircuit considérée), on passe à l'étape E812 à laquelle on active la possibilité d'exécution automatique du programme : selon la variante prévue pour son inhibition, l'activation de la possibilité d'exécution automatique pourra consister à rétablir le nom du fichier sous sa forme impliquant un lancement automatique, à déplacer le fichier dans un répertoire permettant son exécution automatique, à modifier son attribut de manière à ce qu'il ne soit plus considéré comme un fichier caché ou à réinstaller le fichier à lancement automatique (s'il a été précédemment effacé), si nécessaire au moyen d'une connexion à distance utilisant les moyens de communication du téléphone portable 100, par exemple en émettant à destination d'un serveur distant une requête pour obtenir le fichier concerné comprenant un identifiant de la carte à microcircuit).

Une fois la possibilité d'exécution automatique activée à l'étape E812, on mémorise à l'étape E816 l'identifiant reçu à l'étape E804 afin d'indiquer pour d'éventuelles mises sous tension ultérieures qu'une première mise sous tension du téléphone portable 100 avec la carte à microcircuit 200 a déjà été réalisée.

Dans tous les cas, les étapes E81 0 et E816 sont par exemple suivies de l'étape E61 0 décrite en référence à la figure 6a.

Les modes de réalisation qui précèdent ne sont que des exemples possibles de mise en oeuvre de l'invention qui ne s'y limite pas. On comprend par mouvement l'évolution dans l'espace de l'objet concerné au cours du temps ; un mouvement pourra donc être formé de plusieurs mouvements élémentaires (effectués en général par l'utilisateur).

## Revendications

1. Carte à microcircuit (200) comprenant :
- des moyens d'interaction (240) avec un dispositif électronique ;
- un capteur de mouvement ou d'orientation (230) générant des signaux représentatifs de mouvements ou d'une orientation de la carte (200) ;
- des moyens d'identification (210) d'au moins un type de mouvement ou de position sur la base desdits signaux ;
**caractérisée en ce qu'**elle comprend :
- des moyens d'émission (210) d'une commande exécutable par le dispositif électronique et associée au type identifié ;
- des moyens de détermination de l'orientation relative de la carte et du dispositif électronique sur la base desdits signaux représentatifs.

2. Carte à microcircuit selon la revendication 1, dans laquelle la carte à microcircuit est un module d'identification et dans laquelle la commande est une commande de la boîte à outils du module d'identification.

3. Carte à microcircuit selon la revendication 2, dans laquelle la carte à microcircuit est une carte d'identification auprès d'un réseau de téléphonie mobile et dans laquelle la commande est une commande de type SIM Toolkit.

4. Carte à microcircuit selon l'une des revendications 1 à 3, dans laquelle la commande est apte à mettre en oeuvre la restitution d'un signal par le dispositif électronique lorsqu'elle est exécutée par le dispositif électronique.

5. Carte à microcircuit selon la revendication 4, dans laquelle la restitution est un affichage d'un menu de l'opérateur sur un écran du dispositif électronique.

6. Carte à microcircuit selon l'une des revendications 1 à 5, dans laquelle le dispositif électronique est un dispositif de télécommunication et dans laquelle la commande est apte à initier une communication lorsqu'elle est exécutée par le dispositif électronique.

7. Carte à microcircuit selon l'une des revendications 1 à 6, dans laquelle le capteur de mouvement (230) est un accéléromètre.

8. Carte à microcircuit selon l'une des revendications 1 à 7, comprenant des moyens de réception, en provenance du dispositif électronique, d'une information indicative d'un événement, les moyens d'identification étant aptes à identifier le type lors de la détection de l'événement et la commande étant associée à l'événement.

9. Carte à microcircuit selon l'une des revendications 1 à 8, comprenant des moyens de détection d'une action de l'utilisateur et des moyens d'association, en fonction de l'action détectée, d'un type de mouvement ou de position du dispositif à une fonction du dispositif.

10. Carte à microcircuit selon l'une des revendications 1 à 9, comprenant des moyens d'émission, à destination du dispositif et sous condition au moins de l'initiation de l'interaction, d'un programme exécutable par un microprocesseur du dispositif.

11. Dispositif électronique (100) portant une carte à microcircuit (200) selon l'une des revendications 1 à 10 et interagissant avec cette carte à microcircuit (200).

12. Procédé de commande d'un dispositif électronique (100) interagissant avec une carte à microcircuit (200) comprenant un capteur de mouvement ou d'orientation (230), **caractérisé en ce qu'**il comprend les étapes suivantes :
- détermination de l'orientation relative de la carte et du dispositif électronique sur la base de premiers signaux représentatifs de mouvements ou d'une orientation de la carte générés par le capteur de mouvement ou d'orientation;
- génération (E306; E400; E630) de seconds signaux représentatifs de mouvements ou d'une orientation de la carte par le capteur de mouvement ou d'orientation ;
- identification (E306; E402, E404; E632, E634, E636) d'un type de mouvement ou de position sur la base desdits seconds signaux ;
- émission (E310; E406; E640) par la carte d'une commande associée au type identifié à destination du dispositif électronique ;
- mise en oeuvre (E314) d'une fonctionnalité du dispositif électronique par exécution (E312; E642) de ladite commande.

## Patentansprüche

1. Chipkarte (200), umfassend:
- Mittel zum Interagieren (240) mit einem elektronischen Gerät;
- einen Bewegungs- oder Orientierungssensor (230), der Signale erzeugt, die repräsentativ für Bewegungen oder eine Orientierung bzw. Ausrichtung der Karte (200) sind;
- Mittel zum Identifizieren (210) mindestens eines Bewegungs- oder Positionstyps basierend auf den Signalen;
**dadurch gekennzeichnet, dass** sie umfasst:
- Mittel zum Senden (210) eines von dem elektronischen Gerät ausführbaren und dem identifizierten Typ zugeordneten Befehls;
- Mittel zum Bestimmen der relativen Orientierung bzw. Ausrichtung der Karte und des elektronischen Geräts basierend auf den repräsentativen Signalen.

2. Chipkarte nach Anspruch 1, wobei die Chipkarte ein Identifikationsmodul ist, und wobei der Befehl ein Befehl aus dem Werkzeugsatz des Identifikationsmoduls ist.

3. Chipkarte nach Anspruch 2, wobei die Chipkarte eine Karte zum Identifizieren in einem Mobilfunknetz ist, und wobei der Befehl ein Befehl vom Typ SIM-Toolkit ist.

4. Chipkarte nach einem der Ansprüche 1 bis 3, wobei der Befehl geeignet ist, die Wiedergabe eines Signals durch das elektronische Gerät durchzuführen, wenn er von dem elektronischen Gerät ausgeführt wird.

5. Chipkarte nach Anspruch 4, wobei die Wiedergabe eine Anzeige eines Benutzermenüs auf einem Bildschirm des elektronischen Geräts ist.

6. Chipkarte nach einem der Ansprüche 1 bis 5, wobei das elektronische Gerät ein Telekommunikationsgerät ist, und wobei der Befehl geeignet ist, eine Kommunikation einzuleiten, wenn er von dem elektronischen Gerät ausgeführt wird.

7. Chipkarte nach einem der Ansprüche 1 bis 6, wobei der Bewegungssensor (230) ein Beschleunigungsmesser ist.

8. Chipkarte nach einem der Ansprüche 1 bis 7, umfassend Mittel zum Empfangen einer von dem elektronischen Gerät ausgehenden, ein Ereignis anzeigenden Information, wobei die Mittel zum Identifizieren geeignet sind, den Typ des Ereignisses bei der Erfassung zu identifizieren, und wobei der Befehl dem Ereignis zugeordnet ist.

9. Chipkarte nach einem der Ansprüche 1 bis 8, umfassend Mittel zum Erfassen einer Benutzerhandlung und Mittel zum Zuordnen eines Bewegungs- oder Positionstyps des Geräts zu einer Gerätefunktion in Abhängigkeit von der erfassten Handlung.

10. Chipkarte nach einem der Ansprüche 1 bis 9, umfassend Mittel zum Senden eines von einem Mikroprozessor des Geräts ausführbaren Programms an das Gerät, bedingt durch mindestens die Einleitung der Interaktion.

11. Elektronisches Gerät (100) mit einer Chipkarte (200) nach einem der Ansprüche 1 bis 10, das mit der Chipkarte (200) interagiert.

12. Verfahren zur Steuerung eines elektronischen Geräts (100), das mit einer Chipkarte (200) interagiert, die einen Bewegungs- oder Orientierungssensor (230) umfasst, **dadurch gekennzeichnet, dass** das Verfahren die folgenden Schritte umfasst:
- Bestimmen der relativen Orientierung bzw. Ausrichtung der Karte und des elektronischen Geräts basierend auf ersten von dem Bewegungs- oder Orientierungssensor erzeugten Signalen, die repräsentativ für Bewegungen oder eine Orientierung bzw. Ausrichtung der Karte sind;
- Erzeugen (E306; E400; E630) von zweiten Signalen, die repräsentativ für Bewegungen oder eine Orientierung bzw. Ausrichtung der Karte sind, durch den Bewegungs- oder Orientierungssensor;
- Identifizieren (E306; E402, E404; E632, E634, E636) eines Bewegungs- oder Positionstyps basierend auf den zweiten Signalen;
- Senden (E310; E406; E640) eines dem identifizierten Typ zugeordneten Befehls an das elektronische Gerät durch die Karte;
- Durchführen (E314) einer Funktionalität des elektronischen Geräts durch Ausführen (E312; E642) des Befehls.

## Claims

1. Microcircuit card (200) including:
- means for interacting (240) with an electronic device;
- a movement or orientation sensor (230) generating signals representing movements or an orientation of the card (200);
- means for identifying (210) at least one type of movement or position on the basis of said signals;
**characterised in that** it includes:
- means for sending (210) a command executable by the electronic device and associated with the identified type;
- means for determining the relative orientation of the card and the electronic device on the basis of said representative signals.

2. Microcircuit card according to claim 1, wherein the microcircuit card is an identification module and wherein the command is a command from the toolkit of the identification module.

3. Microcircuit card according to claim 2, wherein the microcircuit card is a mobile telephone network identification card and wherein the command is a SIM Toolkit command.

4. Microcircuit card according to any of claims 1 to 3, wherein the command is adapted to effect the reproduction of a signal by the electronic device when it is executed by the electronic device.

5. Microcircuit card according to claim 4, wherein the reproduction is the display of a menu of the operator on a screen of the electronic device.

6. Microcircuit card according to any of claims 1 to 5, wherein the electronic device is a telecommunication device and wherein the command is adapted to initiate a call when it is executed by the electronic device.

7. Microcircuit card according to any of claims 1 to 6, wherein the movement sensor (230) is an accelerometer.

8. Microcircuit card according to any of claims 1 to 7, including means for receiving, from the electronic device, information indicating an event, the identification means being adapted to identify the type on detection of the event and the command being associated with the event.

9. Microcircuit card according to any of claims 1 to 8, including means for detecting an action of the user and means for associating a type of movement or position of the device with a function of the device as a function of the action detected.

10. Microcircuit card according to any of claims 1 to 9, including means for sending the device, subject to the condition at least of the initiation of the interaction, a program executable by a microprocessor of the device.

11. Electronic device (100) carrying a microcircuit card (200) according to any of claims 1 to 10 and interacting with that microcircuit card (200).

12. Method of controlling an electronic device (100) interacting with a microcircuit card (200) including a movement or orientation sensor (230), **characterised in that** it includes the following steps:
- determining the relative orientation of the card and the electronic device on the basis of first signals representing movements or an orientation of the card that are generated by the movement or orientation sensor;
- the movement or orientation sensor generating (E306; E400; E630) second signals representing movements or an orientation of the card;
- identifying (E306; E402; E404; E632; E634; E636) a type of movement or position on the basis of said second signals;
- the card sending (E310; E406; E640) a command associated with the type identified to the electronic device;
- execution (E314) of a function of the electronic device by execution (E312; E642) of said command.
